# EUROPEAN PATENT APPLICATION

(11) **EP 1 574 481 A1**
(43) Date of publication of application: **14.09.2005**
(21) Application number: 05004502.0
(22) Date of filing: 02.03.2005
(51) Int. Cl.: C02F 3/00, C02F 3/04

(54) **Purification plant**

(30) Priority: 09.03.2004 SE 0400580
(71) Applicant: Hübbinettes Prefab AB, 751 04 Uppsala (SE)
(72) Inventor: Hübinetto, Ingvar, 753 25 Uppsala (SE)
(74) Representative: Svanfeldt, Hans-Ake

(57) **Abstract**

A purification plant (10) for purification of waste water separated from sludge, comprising a buffer chamber (16) with a controllable first flow restricting device (17), a flow control unit (29), a purifier (12) with a closed purifying bed (14) and an outlet (19) for purified water. The flow restricting device (17) is arranged to control the flow of waste water from the buffer chamber to the purifier (12). To make it possible to control the contact time between the waste water and the purifying bed (14), the purification plant (10) further comprises a second flow restricting device (31) at the outlet (19) of the purifying bed (14).

## Description

### Technical area

The present invention refers to a purification plant for purification of waste water from single households, farms or the like.

### Prior art

Run-off of nutrients as phosphorus and nitrogen into the nature causes increasing problems considering eutrophication of lakes and water courses. These nutrients mainly stem from fertilisers in agriculture and from waste water from single households normally discharged into soils and watercourses.

We are further getting into a situation where phosphorus worth digging is becoming scarce, and as rational plant production demands an input of nutrients this in itself becomes a problem.

For those reasons, all handling of waste water should fulfil three demands. It should be hygienic, not disturb the environment in the air, water and the soil and give room for recirculation, returning, of nutrients to farm land.

Waste water discharged from a single household is mainly first separated in a mechanical operation consisting of a one, two or three chamber pit and sometimes of a number of consecutive one chamber pits. This mechanical purification separates coarse material and suspended material, sludge. The mechanical separation is normally called sludge separation. The sludge separation device reduces ca 10% to 30% of the phosphorus and nitrogen in the wastewater.

After the mechanical purification there is sometimes a biological purification step to take care of the remaining 70% to 90% of nutrients. The purification step means letting the waste water percolate through a media, often a sand media or directly into the soil. The sand material can absorb substances and allows the growth of micro organisms which break down larger organic substances and build in smaller ingredients into its biomass.

Building new houses today the most common types of solutions of handling household waste water is by infiltration plants and soil beds. There are two main differences between infiltration plants and soil beds. In an infiltration plant the waste water is purified in the local soil where soil variety permits it, whereas in a soil bed, sand media in which the purification will take place have to be added. This gives a limited purification volume in soil beds. The other difference is that the water in an infiltration plant will have to find its own way down to the ground water, in soil beds the water after purification is collected in drainpipes discharging into a surface water recipient. This does however not stop water finding its way into the groundwater, if there is no sealed bottom in the soil bed. A soil bed is necessary when the local soil variety does not allow sufficient permeability of waste water or when there is a risk of polluting drinking water sources or the like.

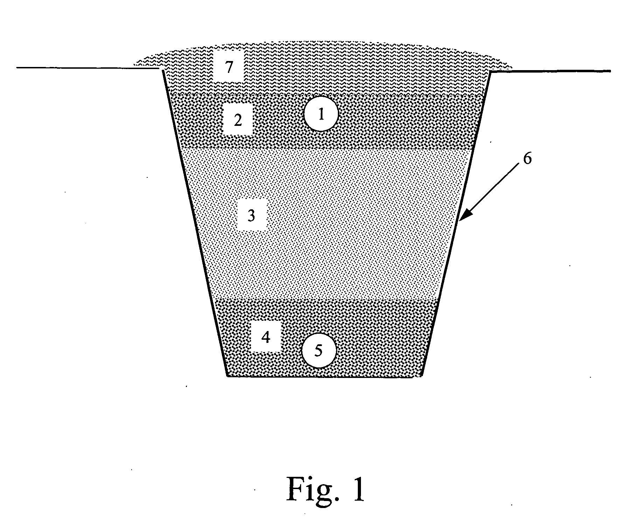

In Figure 1 a soil bed is shown in more detail, including a distribution pipe 1 for mechanically separated waste water, a distribution layer 2 distributing the waste water from the distribution pipe 1 over a larger surface, a sand bed 3 in which the purification takes place, a drainage layer 4 for drainage of the purified waste water and a drainage pipe 5 to carry off the purified waste water. The system is permanent and it is built on the place where it will be used and the above mentioned layers fill up a pit which is properly dug for the purpose. Finally the system is covered by a layer of soil.

These types of systems have during the first 5 years a purification capacity of 60 - 80% according to investigations made at the Swedish University of Agricultural Sciences (SLU). After that, the systems are degrading considerably and after 10 years the purification capacity is down to 25%. Single household outlets accordingly discharge large amounts of nutrients into groundwater and water courses.

Disadvantages of these systems is accordingly that the purification capacity is strongly reduced in the course of time and that it is not possible to recirculate nutrients absorbed in the bed to farm land.

An investigation made at the Limnological Department, Uppsala University shows that the phosphorus content in a sand bed 3 in a soil bed can be regained by using the sand for soil improvement in agricultural production. It is further known that straw will absorb nitrogen and that the nitrogen can be regained in the same way.

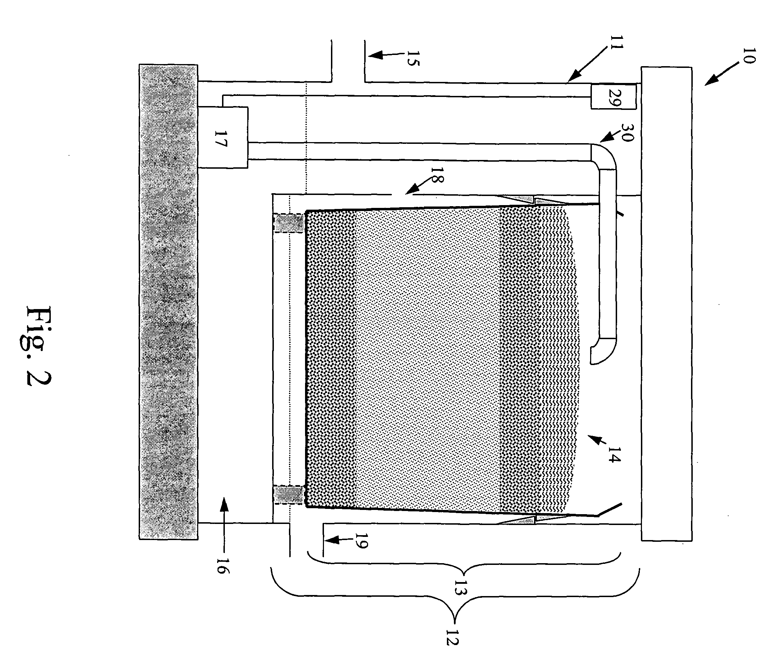

In SE 522 375, see figure 2, is shown a purification plant 10 for separation of nutrients from household waste water separated from sludge including a purification casing 11, a purifier 12, a purification cartridge 13 with a purification bed 14 which is detachable arranged in the purifier 12, an inlet pipe 15 by which waste water to be purified are let into the purifier 10, a buffer chamber 16 where incoming waste water is collected, a flow restricting device in the form of a pump 17 which regularly supplies the purifier 13 with waste water to separate, and an outlet by which purified water is let out of the purifier 10 into a suitable recipient like a water course or a pit filled with rocks for infiltration into the ground or similar purposes.

This purification plant 10 gives an excellent result in most cases, but it has been shown that waste water may percolate too quickly through the purification bed 14, whereby optimal purification effect is not reached. This has been shown in "Small scale purification of household waste water by a Polonite®-filter" by David Everbom a Published Masters Thesis 2003, The Royal Technical University (KTH), Stockholm, Sweden.

### Summary of the invention

A purification plant has been constructed making it possible to better control the contact time between the waste water and the purification bed in a closed purification system. The purification plant is defined in claim 1 and embodiments of the same are defined in the dependent claims.

One advantage with the purification plant according to the present invention is that the degree of purification for the plant increases as the contact time between waste water and the purification bed is increased.

Another advantage is that the degree of purification can be kept high throughout the lifetime of the purification plant.

Yet another advantage is that the plant can be controlled so that the purification bed is dried out to restore sorption areas giving an improved sorption.

### Short description of the drawings

The invention is described in more detail in the following in connection with drawings, in which
Fig. 1 is a soil bed in a cross section,
Fig. 2 is an illustration of a prior art purification plant in cross section
Fig. 3 schematically shows a cross sectional view of one embodiment of the present invention.

### Detailed description of the invention

The present invention is here shown as a purification plant 10 of the type which is shown in SE 522 375 with exchangeable purifying cartridges 13, but it can also be applied in purifying plants without exchangeable purifying cartridges 13, on condition that the purifier 12 is of a closed type. The conception of a closed purifier 12 here means a purifier 12 with a purifying bed 14 enclosed in a container or such like with an inlet 30 for mechanically separated waste water and an outlet 19 for purified waste water. In a purifier 12 of this type the waste water is consequently barred from leaving the bed 14 in any other way than via the outlet 19, and on the same time any additionally water, e.g. surface water, is prevented from entering the bed 14.

The purifying plant according to SE 522 375 is as has been mentioned above supplied with a buffer tank 16 and a flow restricting device 17 the purpose of which is to guide the flow of effluents through the purifier 12, partly to avoid drying out and partly to avoid overloading the purifying bed 14, thus generating an even flow through the purifying bed. As mentioned above, the flow restricting device 17 may for example be a pump for pumping waste water from the buffer chamber 16 to the purifier 12.

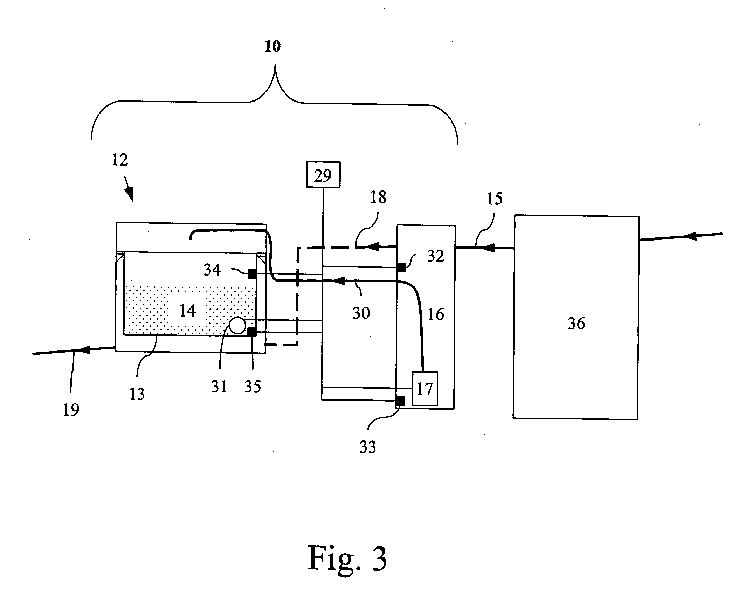

One embodiment of the present invention is shown in figure 3, where corresponding reference numbers refer to the corresponding objects in fig 2. As can be seen, the present invention is based on the same principles as in SE 522 375, but it solves the problem that the waste water sometimes passes the purifying bed 14 too fast.

According to a general embodiment, the present invention relates to a purification plant 10 for purification of mechanically separated waste water, comprising a buffer chamber 16 with a controllable flow restricting device 17, a flow control unit 29 linked to the first flow restricting device 17, a purifier 12 with a closed purifying bed 14 and an outlet 19 for purified water. The flow restricting device 17 is arranged to govern the flow of waste water from the buffer chamber 16 to the purifier 12. The purifying plant 10 has further been equipped with a second controllable flow restricting device 31 controlling the flow of purified waste water from the purifying bed 14 to the outlet 19.

The embodiment shown in Fig. 3 further comprises a purifying cartridge 13 in which the bed 14 itself is arranged. The purifying cartridge 13 is of a similar type as the one shown in SE 522 375, with the difference that it is a closed construction with one single outlet. It is the water sealed ("closed") construction of the cartridge 13 together with the second controllable flow restricting device 31 that makes it possible to increase the contact time for the waste water.

Preferably, the second controllable flow restricting device 31 is a controllable flow restricting device also connected to the flow control unit 29. In Fig. 3, the second controllable flow restricting device 31 is shown in the form of a controllable outlet valve, but it may also be a pump device or the like.

To increase the contact time for the waste water in the purifying bed 14, the flow control unit 29 is preferentially arranged to at suitable intervals alternately fill respectively empty the purifier 12 by controlling the first 17 and the second 31 flow restricting device, respectively.

To reach optimal purification in the purifying plant 10 according to the present invention, it is important that the waste water to be purified is put in contact with the purifying 14 bed for a sufficiently long time period, hence called "purification period", and that the purification bed at regular intervals is emptied for aeration and for possible drying, hence called "aeration period", to make possible the restoration of sorption surfaces of the phosphorus absorbing material. The preferred durations of time for purification and drying periods respectively are mainly decided by the material in the purifying bed 14. However, it can be stated that the purification periods generally are of a predefined duration (except in the special case below when it is interrupted), while the aeration periods is the time between two purification periods and accordingly depends on the proportions of the purifying plant design and the influx of waste water.

According to a simple embodiment, the durations of periods for purification respectively aeration are controlled by a time function in the flow control unit 29, i.e. the waste water is held back during a predefined time period in the purifying bed 14, whereby it is emptied and dried during a second time period, whereupon it is filled again. Such completely time based control functions sufficiently in some applications, for instance when the influx of waste water is constant over time and when buffer chamber 16 and purifier 12 are over dimensioned.

In more normal cases, where the influx of waste water varies with time, the time control is preferably supplemented with level sensors 32-35 in the buffer chamber 16 and in the purifier 12, respectively. In Figure 3 there is an upper level sensor 32 and a lower sensor 33 arranged in the buffer chamber, the upper level sensor 32 indicates to flow control unit 29 when the liquid surface in the buffer chamber 16 reaches an upper permitted level. When the flow control unit 29 receives the signal from the upper level sensor 32 it initiates refilling of the purifier 12 and if this happens during a purification period, the purifier 12 first has to be emptied. In order to avoid flooding of the buffer chamber 16 in such a situation, the upper flow level sensor 32 is preferably arranged a bit below the brim outlet 18 of the buffer chamber so there is a security volume able to receive any further influx during such an emptying of the purifier 12. The lower level sensor 33 in the buffer chamber indicates that the buffer chamber 16 is empty and that the filling of the purifier 12 should be interrupted. In the same way there is an upper 34 respectively a lower 35 level sensor in the purifier 12, where the upper 34 indicates that the purifier 12 is full and the filling should consequently be terminated and the lower 35 indicates that the purifier 12 is empty and the emptying should be terminated.

In situations of low flows it may be suitable with a third intermediate level sensor (not shown) in the buffer chamber 16, this sensor is arranged at a level corresponding to the smallest volume which should be added to the purifier 12 to reach a necessary purification degree. In this case, the flow control unit 29 is arranged so as to only initiate filling of the purifier when the intermediate level sensor indicates that the required liquid level is reached.

According to an alternative embodiment, the level sensor/sensors 32, 33 in the buffer chamber 16 are arranged so as to give the present liquid volume in the buffer chamber as an output signal. Further, the flow control unit 29 is arranged to detect the speed of any increase of volume in the chamber 16 from readings of the actual buffer volume at several points in time. If the influx of waste water to the buffer chamber 16 is large on the same time as the buffer volume is getting close to an upper limit, then the flow control unit 29 may initiate the emptying of the purifier 12 before the ongoing purification is terminated, to make possible the filling of the purifier 12 and a new period of purification to take place, whereby the level in the buffer chamber 16 is lowered so that it can receive more incoming liquid. By such an active governing system a reasonably purification degree is maintained even when the purification plant 10 is overloaded during a period of time. By adding a microprocessor unit and a memory unit to the device for governing the flow 29 it may further be arranged to automatically govern the duration of the purification and drying periods based on previously registered flows etc.

The number and the placement of the level sensors may of course be varied in many ways, at the same time as the general control principle with alternating emptying and aeration periods are maintained.

The purifying bed 14 in the purifier 12 may be of the same type and dimensioned in the same way as has been described in SE 522 375, but in one embodiment it comprises a Polonite® layer for phosphorus reduction.

In some cases essentially all the daily volume of waste water may be supplied to the purification plant 10 during a short period of time. It is therefore appropriate to dimension the buffer chamber 16 so that it can hold at least a normal day volume of waste water from the source of waste water the purifying plant 10 is connected to.

As there is always a risk of overloading the purifying plant 10, i.e. if a too large amount of waste water is added to fast to the purification plant 10, there is provided an overflow protection device 18 arranged between the buffer chamber 16 and the outlet 19 of the purifier, the overflow protection device 18 allowing surplus of wastewater to leave unpurified out into the recipient. This is done in order to avoid a situation where the whole purifying plant 10 is flooded.

One example of dimensioning of the purifying plant 10 is that it is dimensioned to be used in connection with 1 - 2 single households, or alternatively connected to a milking parlour on a farm producing a volume of maximum 400 L/day. In both cases the buffer chamber will have an appropriate volume of about 500 L, the purifier 12 has a capacity of purification of 500 litres for each purification period with a minimum purification volume of 300 litres (depending on the construction and content of the purifying bed). A purifier 12 dimensioned according to above will have time to purify the whole daily production during a purification period giving good capabilities to manage momentary flow increases.

The purification plant 10 may of course be divided into two or more units with separate functions if so desired, e.g. a buffer chamber 16 with a pump 17 and a separate purifier 12 according to the design described in Figure 3. It may also be appropriate to offer a purification plant 10 including a sludge separator 36 (for instance a three chamber pit) integrated with a purifying plant 10 according to the present invention. In a system preceded by a sludge separator 36 preferably the last chamber in the sludge separator is used as a buffer chamber 16 for the purifier 12.

The purifying plant 10 is dimensioned to give a satisfactory function during a predetermined time period, whereby the purifying bed 14 is replaced by exchanging the purifying cartridge 13 or similar procedures. As the initial degree of purification is restored by exchanging the purifying bed, considerably better long term purification is achieved compared to present systems.

## Claims

1. A purification plant (10) for waste water separated from sludge, comprising a buffer chamber (16) with a controllable first flow restricting device (17), a flow control unit (29), a purifier (12) with a closed purification bed (14) and an outlet (19) for purified water, where the flow restricting device (17) is arranged to control the flow of waste water from the buffer chamber (16) to the purifier (12) **characterised in that** the purifying bed (14) is provided with a second flow restricting device (31) at the outlet (19).

2. A purification plant (10) according to claim 1 **characterised in that** the second flow restricting device (31) is a controllable flow restricting device and it is wired to the flow control unit (29).

3. A purification plant (10) according to claim 2 **characterised in that** the flow control unit (29) is arranged to alternately fill and empty the purifier (12) by controlling the first (17) the second (31) flow restricting device, respectively.

4. A purification plant (10) according to claims 2 or 3 **characterised in that** the control of the flow restricting devices is time based.

5. A purification plant (10) according to any of the claims 2 to 4 **characterised in that** it further comprises at least one level sensor (32, 33) connected to the flow control unit (29) and influencing the control of the flow restricting devices (17, 31).

6. A purification plant (10) according to any of the claims 2 to 5 **characterised in that** it further comprises at least one level sensor (34, 35) arranged in the purifier and connected to the flow control unit (29) and influencing the control of the flow restricting devices (17, 31).

7. A purification plant (10) according to any of the claims 2 to 6 **characterised in that** the second flow restricting device (31) is a controllable outlet valve.

8. A purification plant (10) according to any of the claims 2 to 6 **characterised in that** the second flow restricting device (31) is a pumping device.

9. A purification plant (10) according to any of the claims 1 to 8 **characterised in that** the purification bed (14) is arranged in an exchangeable purifying cartridge (13).

10. A purification plant (10) according to any of the claims 1 to 9 **characterised in that** it further comprises a sludge separator (36) to remove sludge and solid particles, whereby the purifying plant (10) is able to purify unseparated waste water.

11. A purification plant (10) according to any of the claims 1 to 10 **characterised in that** it is constructed as one unit.

12. A purification plant (10) according to claim 10 **characterised in that** the three chamber pit (36) and the buffer chamber (16) are integrated as one structure.
